Europäisches Patentamt

European Patent Office

Office européen des brevets

(11) Publication number: **0 265 391 B1**

# EUROPEAN PATENT SPECIFICATION

(45) Date of publication of patent specification: **13.11.91**   (51) Int. Cl.⁵: **B60H 1/00, H01H 41/00**

(21) Application number: **87830325.4**

(22) Date of filing: **09.09.87**

(54) A three-level regulator for air-conditioning systems for motor vehicles.

(30) Priority: **20.10.86 IT 6779086**

(43) Date of publication of application:
**27.04.88 Bulletin 88/17**

(45) Publication of the grant of the patent:
**13.11.91 Bulletin 91/46**

(84) Designated Contracting States:
**DE ES FR GB SE**

(56) References cited:
**GB-A- 2 162 373**
**US-A- 3 187 136**
**US-A- 3 786 210**
**US-A- 4 458 117**
**US-A- 4 591 677**

(73) Proprietor: **SICEB S.p.A.**
**Via Rio Galletto 1**
**I-17045 Legino (Savona)(IT)**

(72) Inventor: **Bianco, Giovanni**
**c/o SICEB S.p.A. Via Bruno Buozzi**
**I-17045 Savona Legino (Savona)(IT)**

(74) Representative: **Buzzi, Franco et al**
**c/o Jacobacci-Casetta & Perani S.p.A. Via**
**Alfieri, 17**
**I-10121 Torino(IT)**

## Description

The present invention relates in general to air-conditioning systems for motor vehicles, including a cooling unit with coolant fluid and an air-circulation fan connected to an electrical supply circuit.

In particular, the invention relates to a three-level regulator intended to be used with conditioning systems, of the type set forth in the pre-characterizing portion of claim 1.

A regulator of this type is known from GB-A-2162373, wherein the actuator/switch elements have complex, delicate and, above all, bulky mechanisms. This known regulator, therefore, has the inconvenience of difficult assembling, questionable reliability and dimensions of considerable bulk, which conflicts with the requirements of use on board a motor vehicle.

The object of the present invention is to avoid the above inconveniences, and this .object is achieved by virtue of the combination of the features recited in the characterizing portion of claim 1.

Item a) of such a combination is generally known per se from US-A-4591677.

Additional features of the invention are set forth in subclaims 2-9.

By virtue of the above characteristics, the three-level regulator according to the invention has a series of important advantages compared to conventional regulators, which are summarized below:

- the conformation of the three switches allows the bulk of the regulator to be minimized, particularly by virtue of a notable reduction in the axial dimension of the body;
- the conformation of the switches ensures small assembly tolerances so that additional final calibrating operations can be eliminated;
- the elastic members constituting the movable contacts, formed by two superimposed plates, ensure a high contact pressure when the switch is closed and a high return force during opening;
- the rivetting system of the movable contacts, with the interposition of resilient washers, ensures that the contact pressure is maintained even in the presence of high thermal stresses caused by different coefficients of expansion of the materials;
- the presence of the sealing ring between the base and the intermediate wall ensures an efficient hermetic seal of the switches, whilst allowing the necessary micrometric sliding of the retaining diaphragm;
- the conformation of the body ensures considerable flexibility in the electrical conduction by means of output cables or connectors of various types, without requiring alterations or structural modifications to the regulator;
- the contacts of the three switches may be dimensioned for a maximum inductive switching current of 20 amps, which allows the fan motor to be controlled directly without the help of a remote control switch, as necessary, on the other hand, in the case of conventional regulators.

Further characteristics and advantages of the invention will become apparent in the course of the detailed description which follows with reference to the appended drawings, provided purely by way of non-limiting example, in which:

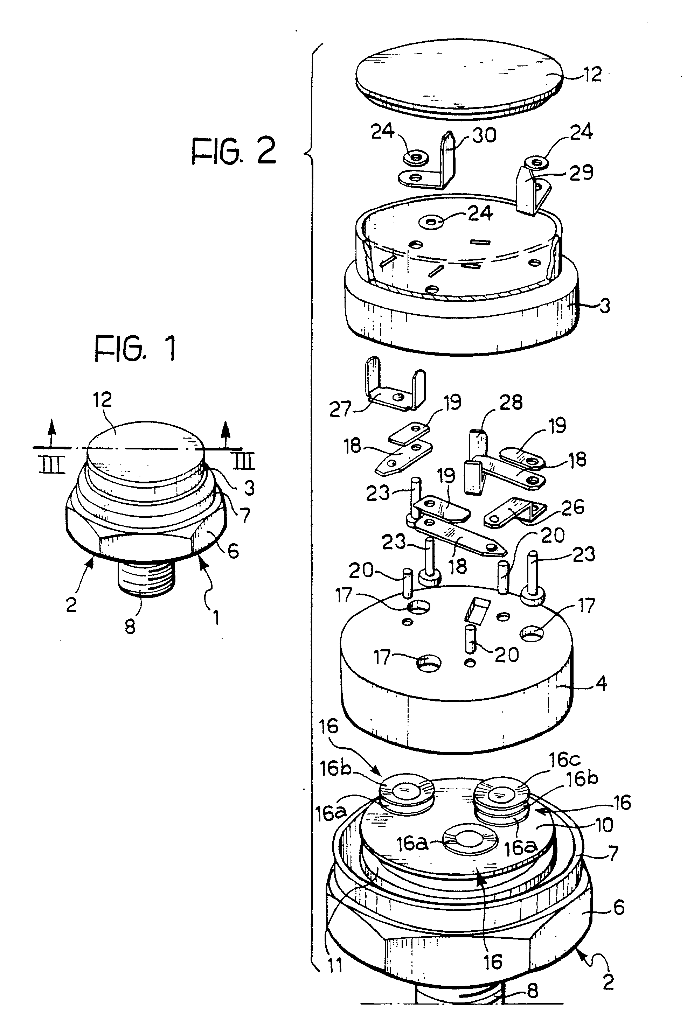

Figure 1 is a perspective view of a three-level regulator according to the invention,

Figure 2 is an exploded perspective view of Figure 1, on an enlarged scale,

Figure 3 is an axial section on the line III-III of Figure 1, on an enlarged scale,

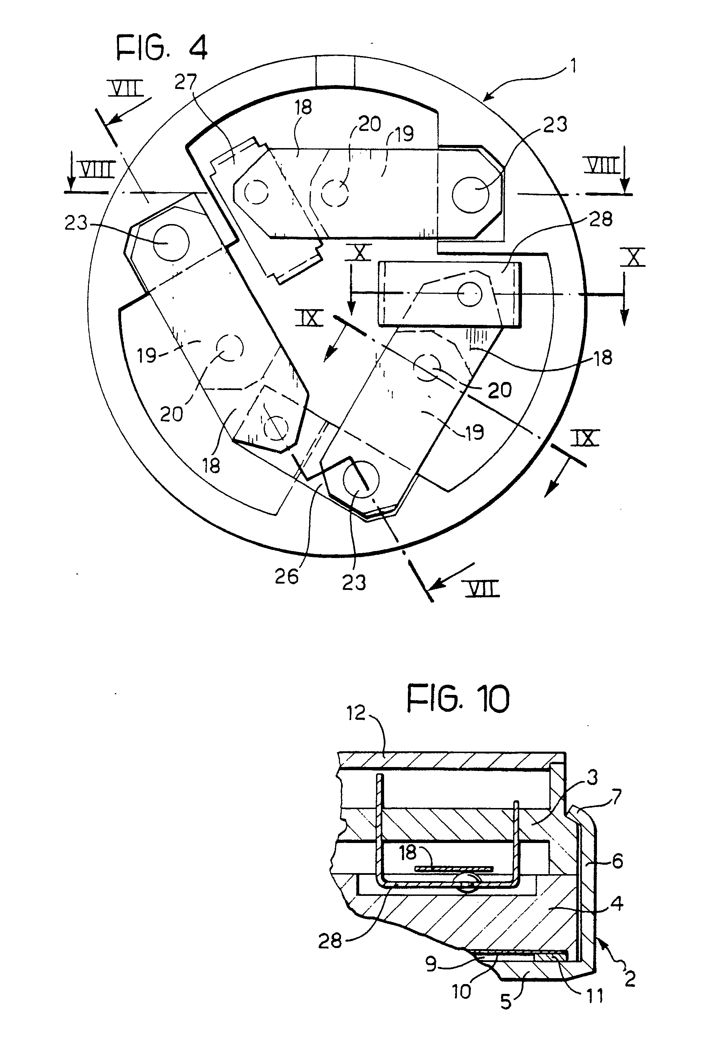

Figure 4 is a cross-section taken on the line IV-IV of Figure 3,

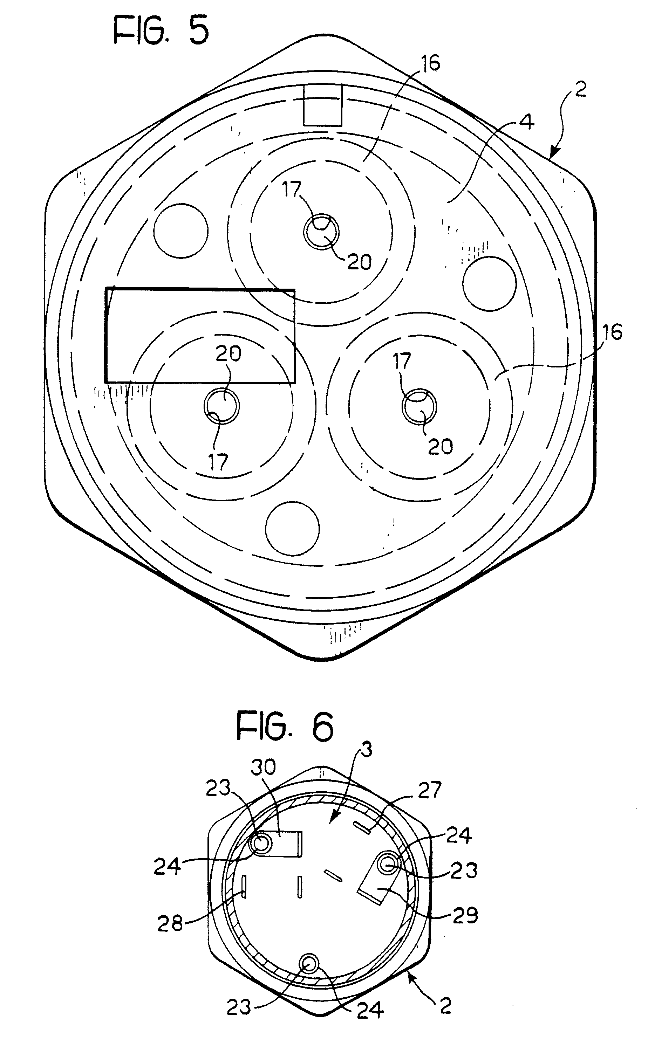

Figure 5 is a cross-section taken on the line V-V of Figure 3,

Figure 6 is a cross-section taken on the line VI-VI of Figure 3, on a reduced scale,

Figure 7 is an axial section taken on the line VII-VII of Figure 4,

Figure 8 is an axial section taken on the line VIII-VIII of Figure 4,

Figure 9 is an axial section taken on the line IX-IX of Figure 4, and

Figure 10 is an axial section taken on the line X-X of Figure 4.

With reference to the drawings, the three-level regulator according to the invention includes a substantially cylindrical, axially flattened body 1 consisting of a base, generally indicated 2, and a cover 3, between which an intermediate wall 4 is interposed and clamped.

The base 2 is generally basin-shaped, with a radial wall 5 facing the intermediate wall 4 and an axial rim 6 which is partially hexagonal in section and whose free end 7 serves to retain the cover 3 by seaming.

An externally threaded tubular appendage 8 projects from the central region of the wall 5 and acts as a connector for connection of the body 1 to the coolant fluid circuit of the cooling unit of an air-conditioning system for motor vehicles. The connection between the body 1 and this circuit is achieved by conventional means, normally downstream of the compressor of the cooling unit with respect to the flow of the coolant fluid, by the screwing of the connector 8 into a corresponding threaded hole by means of a normal spanner engaged with the hexagonal portion of the rim 6.

During use, the coolant fluid is admitted, through the tubular connector 8, to an axially-restricted pressure chamber 9 between the wall 5 of the base 2 and the facing surface of the intermediate wall 4. The pressure chamber is sealed from the remaining part of the body 1 by means of an elastically deformable diaphragm 10 whose outer edge is gripped between the wall 5 of the base 2 and the intermediate wall 4, with the interposition of a sealing ring 11 able to permit micrometric radial sliding of the diaphragm 10 during its deformation. This diaphragm 10 is normally of a substantially-inextensible, heat- and wear-resistant plastics material, for example, a sheet of polyimide known commercially as KAPTON.

A protective cap 12 is also applied to the external side of the cover 3 and can be removed to allow the regulator to be connected to the electrical supply circuit of the cooling unit and air-circulation fan of the conditioning system for motor vehicles, in the manner explained below.

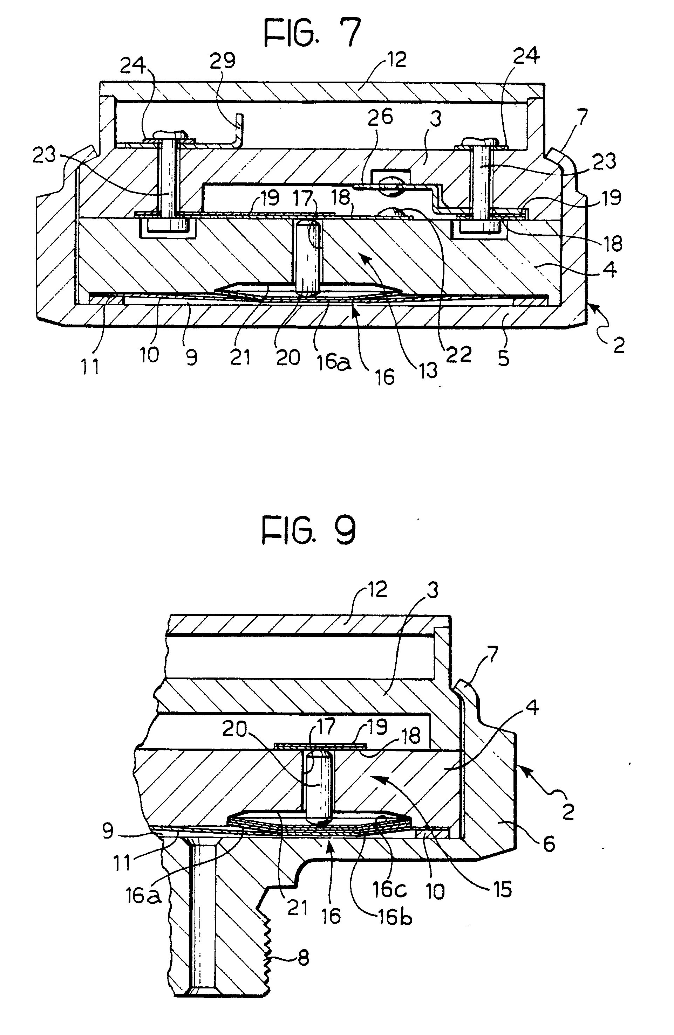

Housed within the body 1 are first, second and third switches which are arranged in parallel and generally indicated 13, 14, 15 respectively in Figures 7, 3 and 8, 9. The three switches have various components which are identical (except, perhaps, for their dimensions) and, for simplicity, are indicated with the same reference numerals in the drawings.

These components include a push rod 20 which can slide through an axial hole 17 in the intermediate wall 4 between a retracted rest position, illustrated in the above-mentioned Figures, and an advanced operating position, illustrated in broken outline in Figure 8 with reference to the second switch 14.

The end of each push rod 20 nearest the wall 5 of the base 2 bears against a respective cap-shaped elastic member 16 and its other end bears against the free end of the spring plate 18 which acts as a movable contact and whose opposite end is fixed to the cover 3 in a manner made clear below. Each movable contact 18 is associated with a respective leaf spring 19 which tends to hold the plate 18 against the surface of the intermediate wall 4 facing the cover 3, towards the corresponding end of the respective push rod 20.

The cap-shaped elastic members 16 consist of metal discs normally arranged in the extroverted condition illustrated in the drawings, and held by the diaphragm 10 in peripheral engagement against the edges of respective recesses 21 formed in the surface of the intermediate wall 4 facing the wall 5 of the base 2.

The cap-shaped elastic members 16 are able to snap-deform from the extroverted condition illustrated, which corresponds to the retracted rest position of the push rods 20, to take up a substantially unstable introverted condition in which they withdraw into their respective recesses 21. As the elastic members 16 change from the extroverted condition to the introverted condition, the push rods 20 are obviously moved from the retracted position to the advanced operating position and the respective movable contacts 18 thus snap into place against the action of the leaf springs 19.

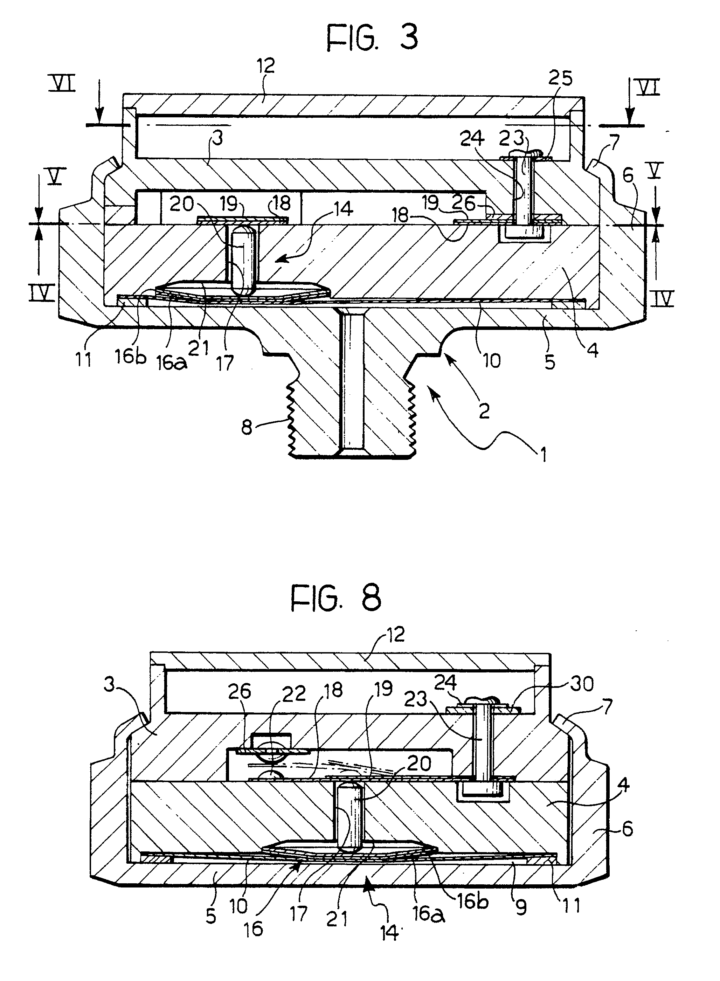

The above-described deformation of the elastic members 16 is brought about, in use, by the effect of the pressure of the coolant fluid supplied to the pressure chamber 9 through the tubular connector 8. In order to achieve differential operation, that is, with different and increasing pressure values of the coolant fluid, the three cap-shaped elastic members 16 have differential elasticities. In particular, the elastic member 16 of the first switch 13 (Figure 7) has a low rigidity so that it deforms from the extroverted condition to the introverted condition at pressures of the order of 2 bars, the elastic member 16 of the second switch 14 (Figures 3 and 8) has a medium rigidity so as to deform at a pressure value of the order of 13 - 14 bars, and the elastic member 16 of the switch 16 (Figure 9) has a high rigidity so as to deform when the pressure reaches very high values, of the order of 30 bars. In order to obtain these characteristics of differential elasticity, the metal discs which constitute the elastic members 16 can be made with different thicknesses (reduced for the first switch 13, medium for the second switch 14, and increased for the third switch 15) and/or, as in the case of the example illustrated, with the use of a single disc 16a for the first switch 13, two superimposed discs 16a, 16b for the second switch 14, and three superimposed discs 16a, 16b, 16c for the third switch 15.

The spring plates 18 which, as stated, constitute the movable contacts of the three switches 13, 14, 15 are fixed to the cover 3, at their ends opposite the ends which are held against the respective push rods 20, by means of three rivets 23. These rivets 23 pass through corresponding axial holes 24 formed in the cover 3 and are fixed at their ends against the external face of this cover 3, with the interposition of respective resilient washers 25. These resilient washers 25 allow any play to be taken up and ensure a correct anchorage of the movable contacts 18 and the relative leaf springs 19, in use, even in the presence of high thermal stresses caused by different coefficients of expansion of the materials.

The free ends of the plates 18 (which for the first and second switches 13 and 14 are conveniently provided with silver coatings 22) cooperate with corresponding fixed contacts carried by the cover 3. These fixed contacts include a substantially Z-shaped plate 26 which cooperates at one end with the movable contact 18 of the first switch 175 and at the other end is permanently connected to the movable contact 18 of the third switch 15, like a bridge, through the respective rivet 23, a first U-shaped plate 27 intended to cooperate with the movable contact 18 of the second switch 14, and a second U-shaped plate 28 intended to cooperate with the movable contact 18 of the third switch 15. The arrangement of the fixed contacts 26, 27 and 28 is such that the first and second switches 13, 14 are normally open (that is, the corresponding movable contacts 18 are spaced from the relative fixed contacts 26 and 27 in the extroverted condition of the corresponding elastic members 16), as indicated in Figures 7 and 8 respectively, whilst the third switch 15 is normally closed (that is, the relative movable contact 18 is closed onto the fixed contact 28 in the extroverted condition of the corresponding elastic member 16), as illustrated in Figure 10.

Two connecting terminals, indicated 29, 30, formed by two L-shaped plates, are fixed to the external face of the cover 3 by means of the rivets 23 associated with the movable contacts 18 of the first and second switches 13, 14 respectively. The connectors 29 and 30 are accessible from the outside, through the cap 12, for connection to the electrical supply circuit of the fan for the forced circulation of air and the compressor of the cooling unit of a conditioning system for motor vehicles, respectively.

In use, as can be seen from the above, the operation of the three switches 13, 14 and 15 is sequential, in response to increasing pressure values of the coolant fluid supplied to the pressure chamber 9 of the body 1 through the tubular connector 8. When the pressure reaches a value of the order of 2 bars, the disc 16a of the elastic member 16 of the first switch 13 changes from the extroverted condition to the introverted condition, which causes, by means of the respective push rod 20, the closure of the corresponding movable contact 18 onto the bridge 26 and the consequent activation of the compressor of the cooling unit through the normally-closed switch 15.

The attainment of a pressure of the order of 13-14 bars causes the two discs 16a and 16b making up the elastic member 16 of the second switch 14 to change from the extroverted condition to the introverted condition and, through the respective push rod 20, the consequent closure of the corresponding movable contact 18 onto the fixed contact 27 so as to cause the intervention of the air-circulation fan.

Should the pressure of the coolant fluid reach anomalous values critical to the safety of the conditioning system, for example, of the order of 30 bars, the three discs 16a, 16b, 16c making up the elastic member 16 of the third switch 15 would change from the extroverted condition to the introverted condition and cause, through the respective push rod 20, the corresponding movable contact 18 to move away from the fixed contact 28, thus deactivating the compressor of the cooling unit.

The elastic members 16 snap back from the introverted condition to the extroverted condition when the pressure of the coolant fluid falls below their respective calibration values, with the help of the elastic thrust of the spring 19.

It is clear from the above that the regulator according to the invention, as well as being particularly simple and functional both from the point of view of production and from the point of view of operation, has a greatly reduced bulk which facilitates its installation in motor vehicles. This installation is further simplified by virtue of the easy external connection of the regulator, which can conveniently be adapted to different requirements by acting only on its connection terminals accessible through the cap 12, without requiring structural modification of the regulator.

## Claims

1. A three-level regulator for air-conditioning systems for motor vehicles, including a cooling unit with coolant fluid and an air-circulation fan connected to an electrical supply circuit, the regulator including a body (1) containing first, second and third electrical switches (13, 14, 15) connected in the electrical supply circuit and arranged to activate the cooling unit, activate the fan and deactivate the cooling unit, respectively, the switches being arranged in plane and including respective fixed contacts (26, 27, 28) and respective movable contacts (18) operated in response to the pressure of the coolant fluid of the cooling unit, means being provided to achieve differential operation of the movable contacts (18) of the first, second and third switches (13, 14, 15) in response to increasing pressures of the coolant fluid, characterized in that:

   a) each of the three switches (13, 14, 15) includes a push rod (20) slidable between a retracted rest position and an advanced operating position for controlling the movement of the respective movable contact (18) by the action of a respective substantially cap-shaped elastic member (16) which is normally arranged in an extroverted condition corresponding to the retracted position of the push rod (20) and is intended to snap into a substantially unstable introverted condition under the action of the pressure of the coolant fluid to cause the rod (20) to advance, the cap-shaped elastic members (16) of the first, second and third switches (13, 14, 15) having differentially increasing elasticities, and auxiliary elastic return means (19) being provided to facilitate the snap return of the cap-shaped elastic members (16) to the extroverted condition, and

b) the body consists of a substantially cylindrical, axially flattened casing (1) including a base (2) provided with a threaded tubular connector (8) for connection to the circuit of the cooling unit, a cover (3) carrying the fixed contacts (26, 27, 28) of the three switches (13, 14, 15), and one intermediate wall (4) which forms a seal between the tubular connector (8) and the cover (3) and has three axial holes (17) through which the push rods (20) of the three switches (13, 14, 15) are slidable, the intermediate wall (4) defining with the base (2) a pressure chamber (9) for the coolant fluid and having three recesses (21) in axial correspondence with the holes (17), in which the cap-shaped elastic members (16) are peripherally engaged, the said one intermediate wall (4) being interposed between the base (2) and the cover (3) and clamped therebetween.

2. A regulator according to Claim 1, characterized in that the cap-shaped elastic members (16) consist of metal discs of different thicknesses (16a, 16b, 16c).

3. A regulator according to Claim 1 or Claim 2, characterized in that the auxiliary elastic return means consist of leaf springs (19) acting on the movable contacts (18).

4. A regulator according to the preceding claims, characterized in that an elastically deformable retaining diaphragm (10) is associated with the cap-shaped elastic members (16) and forms a seal between the three switches (13, 14, 15) and the coolant fluid.

5. A regulator according to Claim 1, characterized in that the movable contacts of the three switches consist of three spring plates (18) carried by the cover (3) and urged against the respective push rods (20) by means of the auxiliary leaf springs (19).

6. A regulator according to Claim 4, characterized in that the retaining diaphragm (10) is clamped peripherally between the base (2) and the corresponding face of the intermediate wall (4), with the interposition of a sealing ring (11).

7. A regulator according to Claim 5, characterized in that each of the spring plates constituting movable contacts (18) of the three switches (13, 14, 15) is fixed at one end to a cover (3) by means of a respective rivet (23) which has one end fixed against the external face of the cover (3) with the interposition of a resilient washer (24).

8. A regulator according to Claim 7, characterized in that it also includes a pair of connecting terminals (29, 30) fixed to the base (2) by means of two of the rivets and accessible from the outside through a removable cap (12).

9. A regulator according to one or more of the preceding claims, characterized in that the contacts of the three switches (13, 14, 15) are of suitable dimensions for a maximum inductive switching current of 20 amps.

**Revendications**

1. Régulateur à trois niveaux pour systèmes de climatisation pour véhicules à moteur, comportant une unité de refroidissement avec un fluide réfrigérant et un ventilateur de circulation d'air relié à un circuit d'alimentation électrique, le régulateur comprenant un corps (1) contenant un premier, un second et un troisième commutateurs électriques (13, 14, 15) connectés dans le circuit d'alimentation électrique et agencés de façon à activer l'unité de refroidissement, activer le ventilateur et désactiver l'unité de refroidissement, respectivement, les commutateurs étant disposés dans un plan et comportant des contacts fixes (26, 27, 28) respectifs et des contacts mobiles (18) respectifs actionnés en réponse à la pression du fluide réfrigérant de l'unité de refroidissement, des moyens étant prévus pour produire un fonctionnement différentiel des contacts mobiles (18) des premier, second et troisième commutateurs (13, 14, 15) en réponse à des pressions croissantes du fluide réfrigérant, caractérisé en ce que :

a) chacun des trois commutateurs (13, 14, 15) comporte une tige de poussée (20) pouvant coulisser entre une position de repos rétractée et une position de fonctionnement avancée pour commander le mouvement du contact mobile (18) respectif par l'action d'un organe élastique (16) respectif ayant sensiblement la forme d'un capuchon, qui est normalement disposé avec sa face bombée vers l'extérieur, correspondant à la position rétractée de la tige de poussée (20) et est destiné à s'enclencher dans une position sensiblement instable dans laquelle sa face bombée est dirigée vers l'intérieur sous l'action de la pression du fluide réfrigérant, afin de provoquer l'avance de la tige (20), les organes élastiques (16) en forme de capuchon des premier, second et troisième commutateurs (13, 14, 15) ayant des élasticités s'accroissant différentiellement, et des moyens de rappel élastiques auxiliaires (19) étant prévus pour faciliter le rappel avec enclenchement des organes élastiques (16) en forme de capuchon vers la position dans laquelle leur face bombée est dirigée vers l'extérieur, et

b) le corps est constitué d'un boîtier (1) axialement aplati, sensiblement cylindrique, comportant une base (2) munie d'un convecteur tubulaire fileté (8) pour la convection au circuit de l'unité de refroidissement, un couvercle (3) portant les contacts fixes (26, 27, 28) des trois commutateurs (13, 14, 15), et une paroi intermédiaire (4) qui forme un joint d'étanchéité entre le convecteur tubulaire (8) et le couvercle (3) et présente trois trous axiaux (17) au travers desquels les tiges de poussée (20) des trois commutateurs (13, 14, 15) peuvent coulisser, la paroi intermédiaire (4) définissant avec la base (2) une chambre de pression (9) pour le fluide de refroidissement et présentant trois creux (21) correspondant axialement aux trous (17), dans lesquels les organes élastiques (16) en forme de capuchon s'engagent par leur périphérie, ladite paroi intermédiaire (4) étant interposée entre la base (2) et le couvercle (3) et étant serrée entre ceux-ci.

2. Régulateur selon la revendication 1, caractérisé en ce que les organes élastiques (16) en forme de capuchon sont constitués par des disques de métal (16a, 16b, 16c) d'épaisseurs différentes.

3. Régulateur selon la revendication 1 ou 2, caractérisé en ce que les moyens de rappel élastiques auxiliaires sont constitués par des ressorts à lame (19) agissant sur les contacts mobiles (18).

4. Régulateur selon les revendications précédentes, caractérisé en ce qu'un diaphragme de retenue (10) déformable élastiquement est associé aux organes élastiques en forme de capuchon (16) et forme un joint d'étanchéité entre les trois commutateurs (13, 14, 15) et le fluide réfrigérant.

5. Régulateur selon la revendication 1, caractérisé en ce que les contacts mobiles des trois commutateurs sont constitués par trois lames élastiques (18) portées par le couvercle (3) et repoussées contre les tiges de poussée respectives (20) au moyen des ressorts à lame auxiliaires (19).

6. Régulateur selon la revendication 4, caractérisé en ce que le diaphragme de retenue (10) est serré sur sa périphérie entre la base (2) et la face correspondante de la paroi intermédiaire (4), une bague d'étanchéité (11) étant interposée entre celles-ci.

7. Régulateur selon la revendication 5, caractérisé en ce que chacune des lames élastiques constituant les contacts mobiles (18) des trois commutateurs (13, 14, 15) est fixée par une extrémité à un couvercle (3) au moyen d'un rivet respectif (23) dont une extrémité est fixée sur la face externe du couvercle (3), une rondelle souple (24) étant interposée entre eux.

8. Régulateur selon la revendication 7, caractérisé en ce qu'il comporte également une paire de bornes de connexion (29, 30) fixées à la base (2) au moyen de deux des rivets et accessibles de l'extérieur par un capuchon amovible (12).

9. Régulateur selon l'une ou plusieurs des revendications précédentes, caractérisé en ce que les contacts des trois commutateurs (13, 14, 15) ont des dimensions appropriées pour le passage d'un courant maximal de commutation par induction de 20 ampères.

**Patentansprüche**

1. Dreistufiger Regler für Kraftfahrzeugklimaanlagen, eine Kühleinheit mit Kühlfluid und ein Luftumwälzgebläse, das mit einem elektrischen Stromkreis verbunden ist, wobei der Regler einen Körper (1) enthält, der erste, zweite und dritte elektrische Schalter (13, 14, 15) enthält, die in den elektrischen Stromkreis geschaltet sind und dazu dienen, die Kühleinheit zu aktivieren, das Gebläse zu aktivieren bzw. die Kühleinheit zu entaktivieren, wobei die Schalter in einer Ebene angeordnet sind und jeweils feste Kontakte (26, 27, 28) und bewegliche Kontakte (18) aufweisen, die in Abhängigkeit von dem Druck des Kühlfluides in der Kühleinheit betätigt werden, wobei Einrichtungen vorgesehen sind, um einen Differenzbetrieb der beweglichen Kontakte (18) der ersten, zweiten und dritten Schalter (13, 14, 15) in Abhängigkeit von steigenden Drücken des Kühlfluides zu erzielen, **dadurch gekennzeichnet,** daß

a) jeder der drei Schalter (13, 14, 15) einen Schubstab (20) enthält, der zwischen einer zurückgezogenen Ruhestellung und einer vorgeschobenen Betriebsstellung zur Steuerung der Bewegung des entsprechenden beweglichen Kontaktes (18) durch die Wirkung eines entsprechenden, im wesentlichen kappenförmigen elastischen Elements (16) beweglich ist, das normalerweise in einem nach außen gewendeten Zustand entsprechend der zurückgezogenen Stellung des Schubstabes (20) angeordnet ist und dazu dient, in einen im wesentlichen instabilen, nach innen gewendeten Zustand unter der Wirkung des Drucks des Kühlfluides zu schnappen, um den Stab (20) zu veranlassen, die kappenförmigen elastischen Elemente (16) der ersten, zweiten und dritten Schalter (13, 14, 15) vorzuschieben, die differentiell zunehmende Elastizitäten aufweisen, wobei elastische Hilfsrückführeinrichtungen (19) vorgesehen sind, um ein Zurückschnappen der kappenförmigen elastischen Elemente (16) in den nach außen gewendeten Zustand zu erleichtern, und

b) der Körper aus einem im wesentlichen zylindrischen, axial abgeflachten Gehäuse besteht, enthaltend eine Basis (2), die mit einem tubusförmigen Gewindeanschluß (8) zum Anschluß an den Kreis der Kühleinheit versehen ist, einen Deckel (3), der die festen Kontakte (26, 27, 28) der drei Schalter (13, 14, 15) trägt, und eine Zwischenwand (4), die eine Dichtung zwischen dem tubusförmigen Anschluß (8) und dem Deckel (3) bildet und drei axiale Löcher (17) hat, durch die die Schubstäbe (20) der drei Schalter (13, 14, 15) verschiebbar sind, wobei die Zwischenwand (4) mit der Basis (2) eine Druckkammer (9) für das Kühlfluid bildet und drei Vertiefungen (21) in axialer Ausrichtung mit den Löchern (17) hat, in die die kappenförmigen elastischen Elemente (16) am Umfang eingreifen, wobei die genannte eine Zwischenwand (4) zwischen die Basis (2) und den Deckel (3) eingefügt und dazwischen festgeklemmt ist.

2. Regler nach Anspruch 1, **dadurch gekennzeichnet,** daß die kappenförmigen elastischen Elemente (16) aus Metallscheiben unterschiedlicher Dicken (16a, 16b, 16c) bestehen.

3. Regler nach Anspruch 1 oder 2, **dadurch gekennzeichnet,** daß die elastischen Hilfsrückstelleinrichtungen aus Blattfedern (19) bestehen, die auf die beweglichen Kontakte (18) einwirken.

4. Regler nach einem der vorhergehenden Ansprüche, **dadurch gekennzeichnet,** daß eine elastisch verformbare Haltemembrane (10) den kappenförmigen elastischen Elementen (16) zugeordnet ist und eine Dichtung zwischen den drei Schaltern (13, 14, 15) und dem Kühlfluid bildet.

5. Regler nach Anspruch 1, **dadurch gekennzeichnet,** daß die beweglichen Kontakte der drei Schalter aus drei Federplatten (18) bestehen, die von dem Deckel (3) gehalten sind und mittels der Blatthilfsfedern (19) gegen die entsprechenden Schubstäbe (20) gedrückt werden.

6. Regler nach Anspruch 4, **dadurch gekennzeichnet,** daß die Haltemembrane (10) am Umfang zwischen die Basis (2) und die zugehörige Seite der Zwischenwand (4) unter Zwischenlage eines Dichtungsringes (11) eingeklemmt ist.

7. Regler nach Anspruch 5, **dadurch gekennzeichnet,** daß jede der Federplatten, die bewegliche Kontakte (18) der drei Schalter (13, 14, 15) bilden, am einen Ende an einem Deckel (3) mittels eines zugehörigen Niets (23) befestigt ist, der mit einem Ende an der Außenfläche des Deckels (3) unter Zwischenlage einer elastischen Scheibe (24) befestigt ist.

8. Regler nach Anspruch 7, **dadurch gekennzeichnet,** daß er weiterhin zwei Verbindungsanschlüsse (29, 30) aufweist, die mittels zwei der genannten Niete an der Basis (2) befestigt sind und von außen durch eine abnehmbare Kappe (12) zugänglich sind.

9. Regler nach einem oder mehreren der vorhergehenden Ansprüche, **dadurch gekennzeichnet,** daß die Kontakte der drei Schalter (13, 14, 15) ausreichende Abmessungen für einen maximalen induktiven Schaltstrom von 20 A aufweisen.

FIG. 2

FIG. 1

# FIG. 3

# FIG. 8

# FIG. 4

VII

VIII

27

18

20 19

23

23

28

X

IX

19

18

20

20

18

19

IX

X

18

26

23

VII

# FIG. 10

12

3

7

6

18

4

28

2

9

10

5

11

# FIG. 5

# FIG. 6

## FIG. 7

## FIG. 9